# FASCICULE DE BREVET EUROPEEN

(11) **EP 3 511 476 B1**
(45) Date de publication et mention de la délivrance du brevet: **26.02.2020**
(21) Numéro de dépôt: 19151173.2
(22) Date de dépôt: 10.01.2019
(51) Int. Cl.: E03D 3/12, F16K 21/10, F16K 21/12

(54) **ROBINET DE CHASSE POUR RINÇAGE DES CUVETTES DE WC AVEC COMMANDE DOUBLE TOUCHE DE GRAND OU PETIT VOLUME**
DRÜCKSPÜLER FÜR WASSERKLOSETTS MIT DRUCKTASTEN FÜR DIE BETÄTIGUNG VON GRÖSSEREN UND KLEINEREN SPÜLMENGEN
FLUSHING VALVE FOR TOILET BOWLS COMPRISING A DOUBLE ACTUATION MECHANISM FOR RELEASING A LARGE OR A SMALL VOLUME OF FLUSHWATER

(30) Priorité: 12.01.2018 FR 1850260
(43) Date de publication de la demande: 17.07.2019
(73) Titulaire: Delabie, 80130 Friville Escarbotin (FR)
(72) Inventeur: TESTORI, Nicolas, 80860 Noyelles sur Mer (FR)
(74) Mandataire: Cabinet Chaillot

(56) Documents cités:
- EP-A1- 2 157 250
- EP-A2- 0 312 750
- DE-A1- 4 033 009

## Description

### Domaine technique

La présente invention concerne un robinet pour rinçage des cuvettes de WC permettant à un utilisateur de déclencher au choix un petit volume ou un grand volume d'eau.

### Arrière-plan technologique

On connaît de tels robinets avec commande d'ouverture par bouton poussoir et fermeture automatique par temporisation hydraulique qui permettent de déclencher au choix de l'utilisateur un grand ou un petit volume d'eau de rinçage, tel que les robinets de chasse décrits dans les documents EP 2 157 250 A1, EP 312750 A et DE 4033009 A. Le document EP 2 157 250 A1 est considéré comme étant l'état de la technique le plus proche de l'objet de la revendication 1.

De tels robinets de chasse ont généralement pour inconvénients de voir le débit d'écoulement d'eau diminuer dès que l'appui de déclenchement d'ouverture est stoppé. Ces robinets de chasse ont également pour inconvénient d'être encombrants et de pouvoir être bloqués en position ouverte en cas de malveillance.

### Résumé

Aussi un des buts de la présente invention est-il de fournit un robinet de chasse du genre ci-dessus qui permet d'obvier les inconvénients présentés par ceux connus.

Un autre but de l'invention est de fournir un tel robinet de chasse qui présente l'avantage de ne demander qu'un faible effort d'appui pour déclencher le processus d'ouverture. Un autre but de l'invention est de fournir un tel robinet dont l'ouverture n'est possible qu'en relâchant l'action sur le dispositif de commande.

Ces buts, ainsi que d'autres qui apparaîtront par la suite, sont atteints par un robinet de chasse pour rinçage des cuvettes de WC, du genre de ceux qui permettent de déclencher au choix un petit ou un grand volume d'eau, comportant un corps de robinet réalisé de préférence en matériau composite, lequel corps reçoit en partie haute un corps de tête dont il est rendu solidaire, par exemple par filetage, caractérisé en ce que la partie inférieure du corps de tête vient en appui sur une chemise de temporisation à double chambre, une chambre de temporisation inférieure et une chambre de temporisation supérieure, ladite chambre de temporisation supérieure venant s'enchâsser dans un logement intérieur situé à la partie inférieure dudit corps de tête, et ladite chambre de temporisation inférieure venant s'intercaler entre la face inférieure de la partie inférieure du corps de tête et un épaulement situé à l'intérieur du corps de robinet.

Une telle chemise de temporisation à double chambre comporte ainsi une chambre de temporisation, la chambre de temporisation supérieure, permettant de contrôler l'ouverture d'un clapet auxiliaire et une chambre de temporisation, la chambre de temporisation inférieure, permettant de contrôler l'ouverture du clapet principal en fonction de l'état d'ouverture du clapet auxiliaire. Ainsi, la chambre de temporisation supérieure permet de maintenir le clapet auxiliaire ouvert durant une durée prédéterminée après que le bouton de rinçage ait été relâché. Le maintien du clapet auxiliaire ouvert permet un différentiel de pression entre la chambre de temporisation supérieure et la chambre de temporisation inférieure, permettant le maintien en position ouverte du clapet principal et donc un écoulement maximal du robinet tant que le clapet auxiliaire n'est pas ramené en contact étanche avec le siège de décompression.

De préférence, la chambre de temporisation inférieure comporte un tube axial qui est solidaire d'une cloison située entre les chambres de temporisation inférieure et supérieure, et à l'extrémité inférieure duquel est situé un piston qui porte le clapet principal, ledit piston coulissant sur ledit tube axial, tandis que la chambre de temporisation supérieure reçoit un piston auxiliaire creux, ledit piston auxiliaire recevant un joint à lèvre dont la partie supérieure est le clapet auxiliaire qui vient en regard d'un siège de décompression, lequel siège de décompression est ménagé axialement dans le fond du logement du corps de tête, un ou plusieurs orifices étant ménagés dans la cloison pour mettre en communication la chambre de temporisation inférieure et le logement intérieur du corps de tête et laisser ainsi libre passage autour de la chambre de temporisation supérieure jusqu'au siège de décompression, des clips faisant partie intégrante du corps de tête étant disposés à la partie inférieure dudit corps de tête, ces clips pénétrant dans les orifices pour rendre solidaire la chemise de temporisation et le corps de tête.

Avantageusement, le siège de décompression est traversé par une tige de commande dont l'épaulement inférieur vient en appui sur la partie supérieure du piston auxiliaire, un canal axial d'évacuation étant situé dans le piston auxiliaire, ledit canal axial communiquant avec le canal interne du tube axial et par suite, à travers le piston, permettant la purge vers l'orifice de sortie du robinet, la partie supérieure du corps de tête comportant un logement axial dont le fond est garni d'un joint à lèvre qui coopère avec la tige de commande, et la partie supérieure de ce logement recevant un guide tige rendu solidaire du corps de tête par filetage ou tout autre moyen, ledit guide tige rendant ainsi prisonnier le joint à lèvre, une cavité intérieure dudit guide tige comportant un épaulement qui coopère avec une collerette de la tige de commande pour limiter ainsi la remontée de ladite tige de commande, et un ressort étant placé entre la collerette et le joint à lèvre pour assurer la remontée de la tige de commande, la partie supérieure de la tige de commande traversant le fond du guide tige et coopérant avec un système de commande à double touche.

De préférence, le corps de robinet est coiffé par un carter enjoliveur, lequel carter comporte en partie supérieure une collerette intérieure qui vient reposer sur le bord supérieur du corps de robinet et le corps de tête comporte un filetage extérieur qui reçoit un contre-écrou pour assurer la fixation du carter enjoliveur sur le corps de robinet, le carter-enjoliveur recevant un système de commande contenu dans un chapeau dont la jupe s'ajuste sur la partie supérieure dudit carter enjoliveur, ladite jupe comportant un tenon qui s'insère dans une mortaise ménagée à la périphérie du carter enjoliveur, le tenon et la mortaise formant un système de verrou-baïonnette qui est positionné préférablement vers l'avant du système de commande, c'est-à-dire face à l'utilisateur, de façon à rendre moins visible une vis fixée dans un trou radial taraudé situé à la partie arrière de la jupe, ladite vis prenant appui sur la partie supérieure du carter-enjoliveur pour assurer la fixation dudit chapeau.

Avantageusement, la partie intérieure du chapeau comporte un taraudage dans lequel vient se visser une bague de réglage, et ladite bague de réglage comporte une jupe intérieure, et reçoit en partie supérieure un ressort qui vient se loger autour de ladite jupe, l'extrémité supérieure du ressort venant en appui dans un logement interne d'un premier bouton dit bouton de commande pour temporisation courte, pour effectuer un petit rinçage, ledit premier bouton comportant une jupe interne qui vient s'ajuster préférablement à l'intérieur de la jupe de la bague de réglage, et la face supérieure du premier bouton comportant un secteur apparent, préférablement bombé, qui traverse la partie supérieure préférablement bombée du chapeau, la partie supérieure du premier bouton de commande, comportant un deuxième secteur, préférablement bombé, situé à un niveau inférieur par rapport au secteur apparent dudit premier bouton , et un deuxième bouton dit bouton de commande pour temporisation longue, pour effectuer un grand rinçage, venant recouvrir le secteur inférieur du premier bouton, ledit deuxième bouton comportant un plot axial qui vient s'insérer dans une lumière ménagée dans le secteur inférieur du premier bouton, la partie inférieure du plot axial comportant un tenon, et un espace étant ménagé entre la partie supérieure du tenon et la face interne du premier bouton, de façon que lorsqu'on appuie sur le premier bouton une course initiale dudit premier bouton est effectuée avant que le deuxième bouton ne soit entrainé par le contact de la face interne du premier bouton avec la partie supérieure du tenon, la partie interne du chapeau comportant un épaulement situé au-dessus du taraudage, et le deuxième bouton comportant un secteur de jupe lequel secteur portant en partie haute des tenons qui, lorsque le système est au repos, viennent en contact avec l'épaulement situé au fond de l'alésage du chapeau, lesdits tenons coulissant dans des cannelures verticales ménagées en travers du taraudage du chapeau.

### Brève description des figures

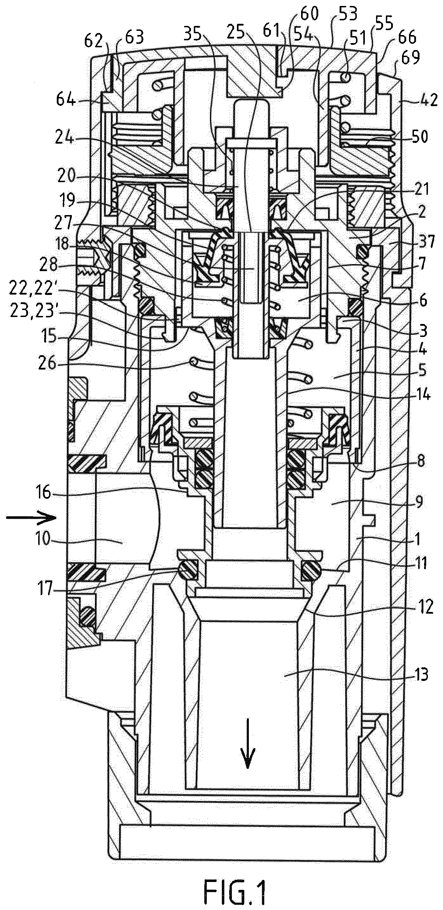

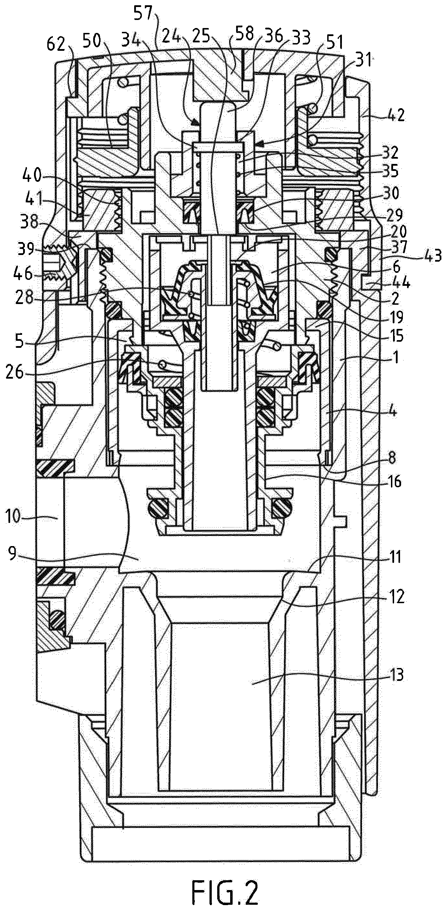

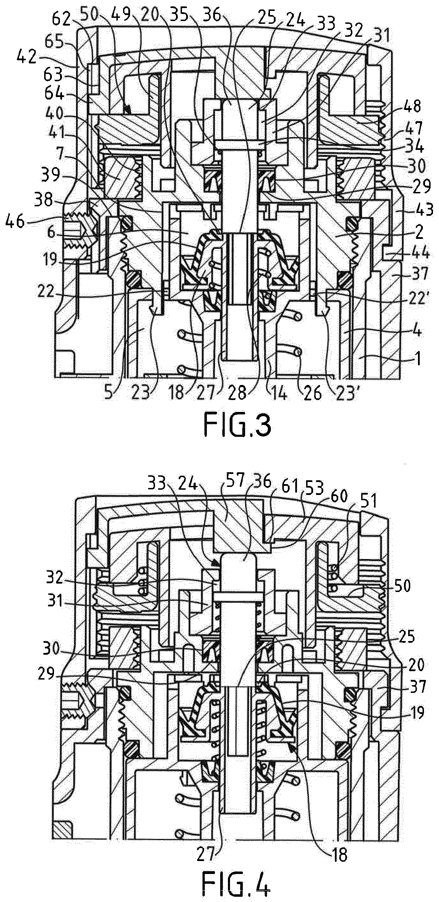

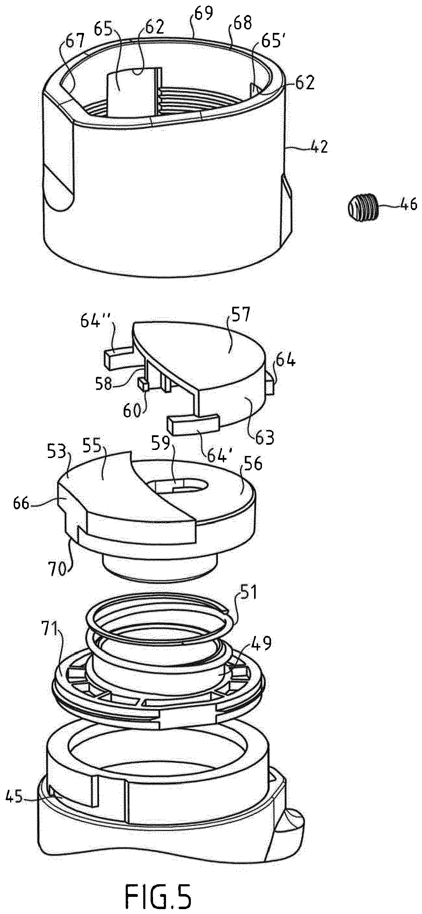

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés.
- **La** **figure 1** représente, en coupe verticale, un robinet de chasse selon la présente invention en position fermée ;
- **La** **figure 2** représente, en coupe verticale, le robinet selon la figure 1 en position ouverte ;
- **La** **figure 3** représente, en coupe verticale, le corps de tête du robinet selon la figure 1 lorsqu'un utilisateur appuie sur le bouton de commande grand débit;
- **La** **figure 4** représente, en coupe verticale, le corps de tête du robinet selon la figure 1 lorsqu'un utilisateur appuie sur le bouton de commande petit débit, et
- **La** **figure 5** est une vue éclatée d'un système de commande contenu dans le corps de tête du robinet selon la figure 3.

### Description détaillée de modes de réalisation

Afin de donner un sens aux termes tels que « supérieur », « inférieur », « haut », « bas », le robinet de chasse selon la présente invention sera considéré en position verticale comme représenté sur les figures.

Ainsi qu'on peut le voir notamment sur la figure 1, un robinet de chasse selon la présente invention comporte un corps de robinet 1 réalisé de préférence par injection en matériau composite. Ce corps de robinet 1 reçoit en partie haute un corps de tête 2 dont il est rendu solidaire, selon le présent exemple de réalisation, par filetage.

La partie inférieure 3 du corps de tête 2 vient en appui sur une chemise de temporisation 4 à double chambre. Cette chemise de temporisation 4 comporte une chambre inférieure 5 et une chambre supérieure 6 séparées par une cloison 15. La chambre supérieure 6 est enchâssée dans un logement intérieur 7 situé à la partie inférieure 3 du corps de tête 2. La chambre inférieure 5 est intercalée entre la face inférieure 3 du corps de tête 2 et un épaulement 8 situé à l'intérieur du corps de robinet 1.

Les deux chambres de temporisation supérieure 6 et inférieure 5 sont coaxiales. Le diamètre de la chambre de temporisation supérieure 6 est inférieur au diamètre de la chambre de temporisation inférieure 5, et un jeu est ménagé entre le logement intérieur 7 de la partie inférieure 3 du corps de tête 2 et le diamètre extérieur de la chambre de temporisation supérieure 6.

La paroi interne de la chambre de temporisation inférieure 5 comporte au moins une rainure verticale (non illustrée). De même, la paroi interne de la chemise de temporisation 4 comporte au moins une rainure verticale (non illustrée).

De façon connue, une chambre d'alimentation 9 est ménagée dans le corps de robinet 1. Cette chambre d'alimentation 9 est agencée au-dessous de l'épaulement 8, et donc sous la chambre de temporisation inférieure 5. Cette chambre d'alimentation 9 reçoit en partie médiane un canal radial 10 d'arrivée du fluide et le fond 11 de ladite chambre d'alimentation 9 comporte axialement en partie basse un orifice 12 qui fait fonction de siège principal du robinet de chasse, le dit orifice 12 communiquant directement avec un canal 13 de sortie du fluide.

Selon le présent exemple de réalisation, la chambre de temporisation inférieure 5 comporte un tube axial 14 qui est solidaire d'une cloison 15 située entre les chambres de temporisation inférieure 5 et supérieure 6. Un piston 16 est monté sur ce tube axial 14. Le piston 16 porte le clapet principal 17 et coulisse sur ce tube axial 14. Une face inférieure du piston 16 forme le plafond de la chambre d'alimentation 9. Une face supérieure du piston 16 forme un fond de la chambre de temporisation inférieure 5.

La chambre de temporisation supérieure 6 comporte un piston auxiliaire creux 18, lequel piston auxiliaire 18 reçoit un joint à lèvre 19 dont la partie supérieure 20 forme le clapet auxiliaire qui vient en regard d'un siège de décompression 21. Ce siège de décompression 21 est ménagé axialement dans le fond du logement intérieur 7 du corps de tête 2. Le piston auxiliaire 18 comporte un canal axial creux 27 traversant de manière coulissante et étanche la cloison 15. Ce canal axial 27 débouche en partie inférieure directement dans le tube axial 14. Le piston auxiliaire 18 repose sur un ressort de rappel 28, qui entoure le canal axial 27 et qui prend appui sur un joint à lèvre inséré dans la cloison 15.

Un ou plusieurs orifices 22, 22' sont ménagés dans la cloison 15 pour mettre en communication la chambre de temporisation inférieure 5 et le logement intérieur 7 du corps de tête 2 et laisser ainsi libre passage autour de la chambre de temporisation supérieure 6 jusqu'au siège de décompression 21.

Préférablement, des clips 23, 23' faisant partie intégrante du corps de tête 2 sont disposés à la partie inférieure 3 du corps de tête 2. Ces clips 23, 23' pénètrent dans les orifices 22, 22' de manière à rendre solidaire la chemise de temporisation 4 et le corps de tête 2 pour faciliter la maintenance.

Le siège de décompression 21 est traversé par une tige de commande 24, dont l'épaulement inférieur 25 vient en appui sur la partie supérieure 20 du piston auxiliaire 18. Un ressort de rappel 35 entoure la tige de commande 24 sur une partie de la hauteur de cette dernière, ainsi que cela est décrit plus loin. De cette manière, quand on appuie sur la tige de commande 24, l'épaulement inférieur 25 de ladite tige de commande 24 appuie sur la partie sommitale du piston auxiliaire 18 qui descend dans la chambre supérieure 6. L'appui de l'épaulement 25 sur le piston auxiliaire 18est sensiblement étanche de sorte que tant que l'utilisateur appuie la sur la tige de commande 24, la communication entre le canal axial 27 de purge et la chambre de temporisation supérieure 6 reste occultée.

Lorsque l'on relâche l'appui sur la tige de commande 24, celle-ci remonte sous la poussée d'un ressort 35, comme expliqué ci-après: lorsque la tige de commande 24 remonte, la coopération entre le joint à lèvre 19 et la face intérieure de la chemise de temporisation 4 délimitant la chambre de temporisation supérieure 6 empêche une remontée simultanée du piston auxiliaire 18. Ainsi, le piston auxiliaire 18 demeure enfoncé dans la chambre de temporisation supérieure 6. La partie supérieure 20 du joint à lèvre 19 est alors éloignée du siège de décompression 21 et de l'épaulement 25 de la tige de commande de sorte que le canal axial 27 de purge est en communication avec la chambre de temporisation supérieure 6. Cette communication permet l'évacuation de l'eau contenue dans la chambre de temporisation supérieure 6 via le canal axial 27 qui débouche dans le tube axial 14 qui débouche lui-même dans l'orifice 12 du clapet principal 17. La ou les rainures prévues sur la paroi interne de la chambre de temporisation supérieure 6 permet une remontée progressive du piston auxiliaire 18 dans la chambre de temporisation supérieure 6 sous l'effet du ressort de rappel 28.

La pression de l'eau dans les chambres de temporisation inférieure 5 et supérieure 6 chute par le fait que l'eau contenue dans la chambre supérieure 6 s'évacue par le canal axial 27 situé dans le piston auxiliaire 18. Le piston 16 qui se trouve ainsi libéré de la pression de l'eau sur sa face supérieure, est poussé vers le haut par la pression du réseau amont dans la chambre d'alimentation 9. Du fait de la remontée du piston 16, le siège principal 12 se trouve alors ouvert ce qui provoque le début du rinçage. L'eau contenue dans la chambre inférieure 5 pouvant s'écouler vers la chambre supérieure 6 par les orifices 22, 22' et l'espace ménagé entre le logement 7 et la paroi externe de la chambre supérieure 6. La durée de remontée du piston auxiliaire 18 dans la chambre de temporisation supérieure 6 sous la poussée du ressort 28 donnera la durée d'ouverture intégrale du clapet principal 17. En effet, lorsque la partie supérieure 20 du joint à lèvre 19 rejoint et ferme le siège de décompression 21, l'eau contenue dans les chambres de temporisation supérieure 6 et inférieure 5 ne peut plus s'évacuer via le canal axial 27 du piston auxiliaire 18. Ainsi, le piston 16, sous la poussée d'un ressort 26 logé dans la chambre de temporisation inférieure 5 entre la cloison 15 et le piston 16 entame sa descente pour refermer le clapet principal 17 ce qui met fin au rinçage. La ou les rainures verticales qui sont ménagées à l'intérieur de la paroi interne de la chambre de temporisation inférieure 5permet de contrôler la vitesse de remplissage de ladite chambre et donc la vitesse de retour du piston 16 sur le siège principal.

La partie supérieure du corps de tête 2 comporte un logement axial 29 dont le fond est garni d'un joint à lèvre 30 coopérant avec la tige de commande 24, et la partie supérieure de ce logement 29 reçoit un guide tige 31 rendu solidaire du corps de tête 2 par filetage ou tout autre moyen. Ce guide tige 31 rend ainsi prisonnier le joint à lèvre 30. Une cavité intérieure 32 du guide tige 31 comporte un épaulement 33 qui coopère avec une collerette 34 de la tige de commande 24 et limite ainsi la remontée de la tige de commande 24. Un ressort 35 est placé entre la collerette 34 et le joint à lèvre 30 pour assurer la remontée de la tige de commande 24. La partie supérieure 36 de la tige de commande 24 traverse le fond du guide tige 31 et coopère avec un système de commande à double touche.

Le corps de robinet 1 en matériau composite est coiffé par un carter enjoliveur 37. Ce carter 37 comporte, en partie supérieure, une collerette intérieure 38 qui vient reposer sur le bord supérieur 39 du corps de robinet 1 et le corps de tête 2 comporte un filetage extérieur 40 qui reçoit un contre-écrou 41 pour assurer la fixation du carter enjoliveur 37 sur le corps de robinet 1.

Selon le présent exemple de réalisation, le carter-enjoliveur 37 reçoit un système de commande contenu dans un chapeau 42 dont la jupe 43 s'ajuste sur la partie supérieure du carter-enjoliveur 37, la jupe 43 comportant un tenon 44 qui s'insère dans une mortaise 45 ménagée à la périphérie du carter enjoliveur 37, le tenon 44 et la mortaise 45 formant un système de verrou-baïonnette qui est positionné préférablement vers l'avant du système de commande, c'est-à-dire face à l'utilisateur, de façon à rendre moins visible une vis 46 fixée dans un trou radial taraudé situé à la partie arrière de la jupe 43, cette vis 46 prenant appui sur la partie supérieure du carter-enjoliveur 37 pour assurer la fixation du chapeau 42.

La partie intérieure du chapeau 42 comporte un taraudage 47 dans lequel vient se visser une bague de réglage 48, qui comporte une jupe intérieure 49 et reçoit, en partie supérieure 50, un ressort 51 qui vient se loger autour de la jupe intérieure 49. L'extrémité supérieure du ressort 51 vient en appui dans un logement interne 52 d'un premier bouton 53 dit bouton de commande pour temporisation courte, pour effectuer un petit rinçage, ce premier bouton 53 comportant une jupe interne 54 qui vient s'ajuster préférablement à l'intérieur de la jupe intérieure 49 de la bague de réglage 48, et la face supérieure de ce premier bouton 53 comporte un secteur apparent 55, préférablement bombé, qui traverse la partie supérieure préférablement bombée du chapeau 42.

Avantageusement, la partie supérieure du premier bouton de commande 53, comporte un deuxième secteur 56 préférablement bombé situé à un niveau inférieur par rapport au secteur apparent 55 du premier bouton de commande 53; un deuxième bouton 57 dit bouton de commande pour temporisation longue, pour effectuer un grand rinçage, vient recouvrir le secteur inférieur 56 du premier bouton 53, ce deuxième bouton 57 comportant un plot axial 58 qui vient s'insérer dans une lumière 59 ménagée dans le secteur inférieur 56 du premier bouton 53. La partie inférieure du plot axial 58 comporte un tenon 60, un espace étant ménagé entre la partie supérieure de ce tenon 60 et la face interne 61 du premier bouton 53. De cette façon, quand on appuie sur le premier bouton 53 une course initiale du ce premier bouton 53 est effectuée avant que le deuxième bouton 57 soit entrainé par le contact de la face interne 61 du premier bouton avec la partie supérieure du tenon 60. La partie interne du chapeau 42 comporte un épaulement 62 situé au-dessus du taraudage 47, et le deuxième bouton 57 comporte un secteur de jupe 63 le quel secteur porte en partie haute des tenons 64, 64' qui, lorsque le système est au repos, viennent en contact avec l'épaulement 62 situé au fond de l'alésage du chapeau 42. Préférablement, les tenons 64, 64' peuvent coulisser dans des cannelures verticales 65, 65' ménagées en travers du taraudage 47 du chapeau 42.

Le secteur apparent bombé 55 du premier bouton 53 comporte en partie avant un premier méplat 66 qui coopère avec un second méplat 67 ménagé dans l'ouverture sommitale 68 du chapeau 42; la partie avant du secteur apparent bombe 55 du premier bouton 53 dépasse sensiblement, par exemple de 2 millimètres, la partie avant sommitale 69 du chapeau 42 de manière à faciliter, et privilégier la manœuvre du premier bouton 53 pour commande du petit rinçage.

Lorsque le système est au repos, la partie inférieure du plot axial 58 du deuxième bouton 57 affleure la partie supérieure 36 de la tige de commande 24.

Lorsque l'un quelconque des boutons de commande 53 et 57 est enfoncé, la face inférieure 70 du premier bouton 53 vient en contact avec la face supérieure 71 de la bague de réglage 48. La course des boutons de commande sera donc plus ou moins profonde, selon que la bague de réglage 48 aura été plus ou moins vissée dans le chapeau 42, le dispositif permettant ainsi de modifier la longueur de course du piston auxiliaire 18 et d'ajuster la temporisation du robinet de chasse pour obtenir le volume d'eau optimal de rinçage.

Bien que l'invention ait été décrite en liaison avec un mode de réalisation particulier, il est évident qu'elle n'y est nullement limitée et qu'elle comprend tous les équivalents techniques des moyens décrits ainsi que leurs combinaisons si celles-ci entrent dans le cadre de la présente invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Robinet de chasse pour rinçage des cuvettes de WC, du genre de ceux qui permettent de déclencher au choix un petit ou un grand volume d'eau, comportant un corps de robinet (1) réalisé de préférence en matériau composite, lequel corps (1) reçoit en partie haute un corps de tête (2) dont il est rendu solidaire, la partie inférieure (3) du corps de tête (2) venant en appui sur une chemise de temporisation (4) à double chambre, une chambre de temporisation inférieure (5) et une chambre de temporisation supérieure (6), ladite chambre de temporisation supérieure (6) venant s'enchâsser dans un logement intérieur (7) situé à la partie inférieure dudit corps de tête (2), et ladite chambre de temporisation inférieure (5) venant s'intercaler entre la face inférieure (3') de la partie inférieure (3) du corps de tête (2) et un épaulement (8) situé à l'intérieur du corps de robinet (1).

2. Robinet selon revendication 1, **caractérisé en ce que** la chambre de temporisation inférieure (5) comporte un tube axial (14) qui est solidaire d'une cloison (15) située entre les chambres de temporisation inférieure (5) et supérieure (6), et à l'extrémité inférieure duquel est situé un piston (16) qui porte le clapet principal (17), ledit piston (16) coulissant sur ledit tube axial (14), tandis que la chambre de temporisation supérieure (6) reçoit un piston auxiliaire creux (18), ledit piston auxiliaire recevant un joint à lèvre (19) dont la partie supérieure (20) est le clapet auxiliaire qui vient en regard d'un siège de décompression (21), lequel siège de décompression (21) est ménagé axialement dans le fond du logement (7) du corps de tête (2), un ou plusieurs orifices (22) étant ménagés dans la cloison (15) pour mettre en communication la chambre de temporisation inférieure (5) et le logement intérieur (7) du corps de tête (2) et laisser ainsi libre passage autour de la chambre de temporisation supérieure (6) jusqu'au siège de décompression (21), des clips (23, 23') faisant partie intégrante du corps de tête (2) étant disposés à la partie inférieure (3) dudit corps de tête (2), ces clips pénétrant dans les orifices (22,22') pour rendre solidaire la chemise de temporisation (4) et le corps de tête (2).

3. Robinet selon l'une des revendications 1 ou 2, **caractérisé en ce que** le siège de décompression (21) est traversé par une tige de commande (24) dont l'épaulement inférieur (25) vient en appui sur la partie supérieure (20) du piston auxiliaire (18), un canal axial (27) d'évacuation étant situé dans le piston auxiliaire (18), ledit canal axial (27) communiquant avec le canal interne du tube axial (14) et par suite, à travers le piston (16), permettant la purge vers l'orifice de sortie (13) du robinet, la partie supérieure du corps de tête (2) comportant un logement axial (29) dont le fond est garni d'un joint à lèvre (30) qui coopère avec la tige de commande (24), et la partie supérieure de ce logement (29) recevant un guide tige (31) rendu solidaire du corps de tête (2) par filetage ou tout autre moyen, ledit guide tige (31) rendant ainsi prisonnier le joint à lèvre (30), une cavité intérieure (32) dudit guide tige (31) comportant un épaulement (33) qui coopère avec une collerette (34) de la tige de commande (24) pour limiter ainsi la remontée de ladite tige de commande (24), et un ressort (35) étant placé entre la collerette (34) et le joint à lèvre (30) pour assurer la remontée de la tige de commande (24), la partie supérieure (36) de la tige de commande (24) traversant le fond du guide tige (31) et coopérant avec un système de commande à double touche.

4. Robinet selon l'une des revendications 1 à 3, **caractérisé en ce que** le corps de robinet (1) est coiffé par un carter enjoliveur (37), lequel carter comporte en partie supérieure une collerette intérieure (38) qui vient reposer sur le bord supérieur (39) du corps de robinet (1) et le corps de tête (2) comporte un filetage extérieur (40) qui reçoit un contre-écrou (41) pour assurer la fixation du carter enjoliveur (37) sur le corps de robinet (1), le carter-enjoliveur (37) recevant un système de commande contenu dans un chapeau (42) dont la jupe (43) s'ajuste sur la partie supérieure dudit carter enjoliveur (37), ladite jupe (43) comportant un tenon (44) qui s'insère dans une mortaise (45) ménagée à la périphérie du carter enjoliveur (37), le tenon et la mortaise formant un système de verrou-baïonnette qui est positionné préférablement vers l'avant du système de commande, c'est-à-dire face à l'utilisateur, de façon à rendre moins visible une vis (46) fixée dans un trou radial taraudé situé à la partie arrière de la jupe (43), ladite vis (46) prenant appui sur la partie supérieure du carter-enjoliveur (37) pour assurer la fixation dudit chapeau (42).

5. Robinet selon la revendication 4, **caractérisé en ce que** la partie intérieure du chapeau (42) comporte un taraudage (47) dans lequel vient se visser une bague de réglage (48), et que ladite bague de réglage comporte une jupe intérieure (49), et reçoit en partie supérieure (50) un ressort (51) qui vient se loger autour de ladite jupe (49), l'extrémité supérieure du ressort (51) venant en appui dans un logement interne (52) d'un premier bouton (53) dit bouton de commande pour temporisation courte, pour effectuer un petit rinçage, ledit premier bouton (53) comportant une jupe interne (54) qui vient s'ajuster préférablement à l'intérieur de la jupe (49) de la bague de réglage (48), et la face supérieure du premier bouton (53) comportant un secteur apparent (55), préférablement bombé, qui traverse la partie supérieure préférablement bombée du chapeau (42), la partie supérieure du premier bouton de commande (53), comportant un deuxième secteur (56), préférablement bombé, situé à un niveau inférieur par rapport au secteur apparent (55) dudit premier bouton, et un deuxième bouton (57) dit bouton de commande pour temporisation longue, pour effectuer un grand rinçage, venant recouvrir le secteur inférieur (56) du premier bouton (53), ledit deuxième bouton (57) comportant un plot axial (58) qui vient s'insérer dans une lumière (59) ménagée dans le secteur inférieur (56) du premier bouton (53), la partie inférieure du plot axial (58) comportant un tenon (60), et un espace étant ménagé entre la partie supérieure du tenon et la face interne (61) du premier bouton (53), de façon que lorsqu'on appuie sur le premier bouton (53) une course initiale dudit premier bouton est effectuée avant que le deuxième bouton (57) ne soit entrainé par le contact de la face interne (61) du premier bouton avec la partie supérieure du tenon (60), la partie interne du chapeau (42) comportant un épaulement (62) situé au-dessus du taraudage (47), et le deuxième bouton (57) comportant un secteur de jupe (63) lequel secteur portant en partie haute des tenons (64, 64') qui, lorsque le système est au repos, viennent en contact avec l'épaulement (62) situé au fond de l'alésage du chapeau (42), lesdits tenons (64, 64') coulissant dans des cannelures verticales (65, 65') ménagées en travers du taraudage (47) du chapeau (42).

## Patentansprüche

1. Druckspüler für Wasserklosetts in der Art derjenigen, die erlauben, wahlweise ein kleines oder ein großes Wasservolumen auszulösen, aufweisend einen Spülerkörper (1), der vorzugsweise aus Kompositmaterial hergestellt ist, wobei der Körper (1) im oberen Teil einen Kopfkörper (2) aufnimmt, mit dem er fest verbunden ist, wobei sich der untere Teil (3) des Kopfkörpers (2) auf einem Zeitgebermantel (4) mit Doppelkammer, einer unteren Zeitgeberkammer (5) und einer oberen Zeitgeberkammer (6), abstützt, wobei die obere Zeitgeberkammer (6) in eine innere Aufnahme (7) eingepasst ist, die sich im unteren Teil des Kopfkörpers (2) befindet, und die untere Zeitgeberkammer (5) zwischen der unteren Fläche (3') des unteren Teils (3) des Kopfkörpers (2) und einem Absatz (8) angeordnet ist, der sich im Inneren des Spülerkörpers (1) befindet.

2. Spüler nach Anspruch 1, **dadurch gekennzeichnet, dass** die untere Zeitgeberkammer (5) ein axiales Rohr (14) aufweist, das mit einer Trennwand (15) fest verbunden ist, die sich zwischen der unteren (5) und oberen (6) Zeitgeberkammer befindet, und an dessen unterem Ende sich ein Kolben (16) befindet, der das Hauptventil (17) trägt, wobei der Kolben (16) auf dem axialen Rohr (14) gleitet, wogegen die obere Zeitgeberkammer (6) einen hohlen Hilfskolben (18) aufnimmt, wobei der Hilfskolben eine Lippendichtung (19) aufnimmt, deren oberer Teil (20) das Hilfsventil ist, das gegenüber einem Dekompressionssitz (21) gelangt, wobei der Dekompressionssitz (21) axial im Boden der Aufnahme (7) des Kopfkörpers (2) eingerichtet ist, wobei eine oder mehrere Öffnungen (22) in der Trennwand (15) eingerichtet sind, um die untere Zeitgeberkammer (5) und die untere Aufnahme (7) des Kopfkörpers (2) in Kommunikation zu versetzen und somit freien Durchgang um die obere Zeitgeberkammer (6) bis zum Dekompressionssitz (21) zu lassen, wobei Klipse (23, 23'), die fester Bestandteil des Kopfkörpers (2) sind, im unteren Teil (3) des Kopfkörpers (2) angeordnet sind, wobei diese Klipse in die Öffnungen (22, 22') eindringen, um den Zeitgebermantel (4) und den Kopfkörper (2) fest zu verbinden.

3. Spüler nach einem der Ansprüche 1 oder 2, **dadurch gekennzeichnet, dass** der Dekompressionssitz (21) von einem Steuerstab (24) durchquert wird, dessen unterer Absatz (25) sich auf dem oberen Teil (20) des Hilfskolbens (18) abstützt, wobei sich ein axialer Auslasskanal (27) in dem Hilfskolben (18) befindet, wobei der axiale Kanal (27) mit dem inneren Kanal des axialen Rohrs (14) kommuniziert und in der Folge durch den Kolben (16), wodurch die Entleerung in Richtung der Ausgangsöffnung (13) des Spülers erlaubt wird, wobei der obere Teil des Kopfkörpers (2) eine axiale Aufnahme (29) aufweist, deren Boden mit einer Lippendichtung (30) ausgestattet ist, die mit dem Steuerstab (24) zusammenwirkt, und der obere Teil dieser Aufnahme (29) eine Stabführung (31) aufnimmt, die mit dem Kopfkörper (2) durch Gewinde oder jedes andere Mittel fest verbunden ist, wobei die Stabführung (31) somit die Lippendichtung (30) einschließt, wobei ein innerer Hohlraum (32) der Stabführung (31) einen Absatz (33) aufweist, der mit einem Kragen (34) des Steuerstabs (24) zusammenwirkt, um somit die Aufwärtsbewegung des Steuerstabs (24) zu begrenzen, und eine Feder (35) zwischen dem Kragen (34) und der Lippendichtung (30) platziert ist, um die Aufwärtsbewegung des Steuerstabs (24) zu sichern, wobei der obere Teil (36) des Steuerstabs (24) den Boden der Stabführung (31) durchquert und mit einem Steuersystem mit doppelter Drucktaste zusammenwirkt.

4. Spüler nach einem der Ansprüche 1 bis 3, **dadurch gekennzeichnet, dass** der Spülerkörper (1) von einem Ziergehäuse (37) bedeckt ist, wobei das Gehäuse im oberen Teil einen inneren Kragen (38) aufweist, der auf dem oberen Rand (39) des Spülerkörpers (1) ruht, und der Kopfkörper (2) ein Außengewinde (40) aufweist, das eine Gegenmutter (41) aufnimmt, um die Befestigung des Ziergehäuses (37) auf dem Spülerkörper (1) zu sichern, wobei das Ziergehäuse (37) ein Steuersystem aufnimmt, das in einer Abdeckung (42) enthalten ist, dessen Schürze (43) sich auf dem oberen Teil des Ziergehäuses (37) anpasst, wobei die Schürze (43) einen Zapfen (44) aufweist, der sich in ein Zapfenloch (45) einfügt, das auf dem Umfang des Ziergehäuses (37) eingerichtet ist, wobei der Zapfen und das Zapfenloch ein Riegel-Bajonett-System bilden, das bevorzugt vor dem Steuersystem angeordnet ist, das heißt, gegenüber dem Benutzer, so dass eine Schraube (46) besser verdeckt wird, die in einem radialen gewindeten Loch befestigt ist, das sich im hinteren Teil der Schürze (43) befindet, wobei sich die Schraube (46) auf dem oberen Teil des Ziergehäuses (37) abstützt, um die Befestigung der Abdeckung (42) zu sichern.

5. Spüler nach Anspruch 4, **dadurch gekennzeichnet, dass** der innere Teil der Abdeckung (42) ein Gewinde (47) aufweist, in das ein Verstellring (48) geschraubt wird, und dass der Verstellring eine innere Schürze (49) aufweist, und im oberen Teil (50) eine Feder (51) aufnimmt, die sich um die Schürze (49) positioniert, wobei sich das obere Ende der Feder (51) in einer inneren Aufnahme (52) eines ersten, als Steuerknopf bezeichneten Knopfs (53) für kurze Zeitgebung abstützt, um eine kleine Spülung durchzuführen, wobei der erste Knopf (53) eine innere Schürze (54) aufweist, die sich bevorzugt im Inneren der Schürze (49) des Verstellrings (48) anpasst, und die obere Fläche des ersten Knopfs (53) einen bevorzugt gewölbten erkennbaren Sektor (55) aufweist, der den bevorzugt gewölbten oberen Teil der Abdeckung (42) durchquert, wobei der obere Teil des ersten Steuerknopfs (53) einen zweiten bevorzugt gewölbten Sektor (56) aufweist, der sich in einer unterer Ebene in Bezug auf den erkennbaren Sektor (55) des ersten Knopfs befindet, und einen zweiten, als Steuerknopf bezeichneten Knopf (57) für lange Zeitgebung, um eine große Spülung durchzuführen, welcher den unteren Sektor (56) des ersten Knopfs (53) bedeckt, wobei der zweite Knopf (57) einen axialen Stift (58) aufweist, der in eine Öffnung (59) eingreift, die in dem unteren Sektor (56) des ersten Knopfs (53) eingerichtet ist, wobei der untere Teil des axialen Stifts (58) einen Zapfen (60) aufweist, und ein Raum zwischen dem oberen Teil des Zapfens und der inneren Fläche (61) des ersten Knopfs (53) eingerichtet ist, so dass, wenn man auf den ersten Knopf (53) drückt, der erste Knopf einen Anfangsweg zurücklegt, bevor der zweite Knopf (57) durch den Kontakt der inneren Fläche (61) des ersten Knopfs mit dem oberen Teil des Zapfens (60) in Bewegung versetzt wird, wobei der innere Teil der Abdeckung (42) einen Absatz (62) aufweist, der sich über dem Gewinde (47) befindet, und der zweite Knopf (57) einen Schürzensektor (63) aufweist, wobei der Sektor im oberen Teil Zapfen (64, 64') trägt, die, wenn sich das System in Ruhe befindet, mit dem Absatz (62) in Kontakt kommen, der sich auf dem Boden der Bohrung der Abdeckung (42) befindet, wobei die Zapfen (64, 64') in vertikalen Rillen (65, 65') gleiten, die durch die Bohrung (47) der Abdeckung (42) eingerichtet sind.

## Claims

1. A flushing valve for rinsing toilet basins, of the type that makes it possible to choose to trigger either a small volume or a large volume of water, including a valve body (1), preferably made from a composite material, said body (1) receiving, in the upper part, a head body (2) with which it is secured, the lower part (3) of the head body (2) bearing on a dual chamber timing jacket (4), a lower timing chamber (5) and an upper timing chamber (6), said upper timing chamber (6) being inserted into an inner housing (7) located at the lower part of said head body (2), and said lower timing chamber (5) being inserted between the lower face (3') of the lower part (3) of the head body (2) and a shoulder (8) located inside the valve body (1) .

2. The valve according to claim 1, **characterized in that** the lower timing chamber (5) includes an axial tube (14) that is secured to a partition (15) located between the lower (5) and upper (6) timing chambers, and at the lower end of which a piston (16) is located that bears the main valve (17), said piston (16) sliding on said axial tube (14), while the upper timing chamber (6) receives a hollow auxiliary piston (18), said auxiliary piston receiving a lip seal (19), the upper part (20) of which is the auxiliary valve that comes opposite a decompression seat (21), said decompression seat (21) being arranged axially in the bottom of the housing (7) of the head body (2), one or several orifices (22) being arranged in the partition (15) so as to place the lower timing chamber (5) and the inner housing (7) of the head body (2) in communication and thus to allow the free passage around the upper timing chamber (6) to the decompression seat (21), clips (23, 23') that are an integral part of the head body (2) being arranged at the lower part (3) of said head body (2), these clips penetrating the orifices (22, 22') in order to secure the timing jacket (4) and the head body (2).

3. The valve according to one of claims 1 or 2, **characterized in that** the decompression seat (21) is passed through by a control rod (24) whose lower shoulder (25) bears on the upper part (20) of the auxiliary piston (18), an axial discharge channel (27) being located in the auxiliary piston (18), said axial channel (27) communicating with the inner channel of the axial tube (14) and subsequently, through the piston (16), allowing the purge through the outlet orifice (13) of the valve, the upper part of the head body (2) including an axial housing (29) whose bottom is provided with a lip seal (30) that cooperates with the control rod (24), and the upper part of this housing (29) receiving a rod guide (31) secured to the head body (2) by thread or any other means, said rod guide (31) thus capturing the lip seal (30), an inner cavity (32) of said rod guide (31) including a shoulder (33) that cooperates with a collar (34) of the control rod (24) to thus limit the rising of said control rod (24), and a spring (35) being placed between the collar (34) and the lip seal (30) in order to ensure the rising of the control rod (24), the upper part (36) of the control rod (24) passing through the bottom of the rod guide (31) and cooperating with a double key control system.

4. The valve according to one of claims 1 to 3, **characterized in that** the valve body (1) is capped by a bonnet casing (37), said casing including, in its upper part, an inner collar (38) that rests on the upper edge (39) of the valve body (1) and the head body (2) includes an outer thread (40) that receives a locknut (41) to ensure the fastening of the bonnet casing (37) on the valve body (1), the bonnet casing (37) receiving a control system contained in a cap (42), the skirt (43) of which fits on the upper part of said bonnet casing (37), said skirt (43) including a tenon (44) that is inserted into a mortise (45) arranged at the periphery of the bonnet casing (37), the tenon and the mortise forming a bayonet lock system that is preferably positioned toward the front of the control system, that is to say, facing the user, so as to make a screw (46) fastened in a tapped radial hole located in the rear part of the skirt (43) less visible, said screw (46) bearing on the upper part of the bonnet casing (37) to ensure the fastening of said cap (42).

5. The valve according to claim 4, **characterized in that** the inner part of the cap (42) includes a tapping (47) in which an adjusting ring (48) is screwed, and **in that** said adjusting ring includes an inner skirt (49), and receives, in the upper part (50), a spring (51) that is housed around said skirt (49), the upper end of the spring (51) bearing in an inner housing (52) of a first button (53) called short delay control button, for performing a small rinse, said first button (53) including an inner skirt (54) that preferably fits to the inside of the skirt (49) of the adjusting ring (48), and the upper face of the first button (53) including a visible sector (55), preferably domed, that passes through the preferably domed upper part of the cap (42), the upper part of the first control button (53) including a second sector (56), preferably domed, located at a lower level relative to the visible sector (55) of said first button, and a second button (57) called long delay control button, for performing a big rinse, covering the lower sector (56) of the first button (53), said second button (57) including an axial stud (58) that is inserted into an aperture (59) arranged in the lower sector (56) of the first button (53), the lower part of the axial stud (58) including a tenon (60), and a space being arranged between the upper part of the tenon and the inner face (61) of the first button (53), such that when one presses on the first button (53), an initial travel of said first button is performed before the second button (57) is driven by the contact of the inner face (61) of the first button with the upper part of the tenon (60), the inner part of the cap (42) including a shoulder (62) located above the tapping (47), and the second button (57) including a skirt sector (63), said sector bearing, in the upper part, tenons (64, 64') that, when the system is at rest, come into contact with the shoulder (62) located at the bottom of the bore of the cap (42), said tenons (64, 64') sliding in vertical grooves (65, 65') arranged through the tapping (47) of the cap (42).
